# EUROPÄISCHE PATENTSCHRIFT

(11) **EP 2 382 620 B1**
(45) Veröffentlichungstag und Bekanntmachung des Hinweises auf die Patenterteilung: **05.09.2018**
(21) Anmeldenummer: 10709152.2
(22) Anmeldetag: 14.01.2010
(51) Int. Cl.: G10K 11/00, G01N 29/24, G01N 29/28

(54) **ULTRASCHALLPRÜFKOPF**
ULTRASOUND TESTING HEAD
TÊTE DE CONTRÔLE À ULTRASONS

(30) Priorität: 27.01.2009 DE 102009006557
(43) Veröffentlichungstag der Anmeldung: 02.11.2011
(73) Patentinhaber: Mannesmann Line Pipe GmbH, 57074 Siegen (DE)
(72) Erfinder: GRAFF, Alfred, 45239 Essen (DE); FISCHER, Gert, 47669 Wachtendonk (DE); BRECKEL, Karl-Heinz, 47239 Duisburg (DE); BERKEMEIER, Jochen, 59065 Hamm (DE)
(74) Vertreter: Meissner, Peter E.
(86) Internationale Anmeldenummer: PCT/DE2010/000052
(87) Internationale Veröffentlichungsnummer: WO 2010/085936

(56) Entgegenhaltungen:
- DE-U1- 8 312 595
- US-A- 3 913 386
- US-A- 4 020 679
- US-A- 5 351 546
- US-A- 5 804 730
- US-A- 6 125 705

## Beschreibung

Die Erfindung betrifft einen Ultraschallprüfkopf zur zerstörungsfreien Prüfung von metallischen Werkstücken, insbesondere von Rohren, gemäß dem Oberbegriff des Patentanspruches 1.
Ein derartiger Ultraschallprüfkopf ist aus der US 4 020 679 A bekannt.

Ein weiterer Ultraschallprüfkopf ist aus der Gebrauchsmusterschrift G 83 12 595.7 bekannt. Dieser besteht aus einer zeilenförmigen Anordnung von Schwingerelementen, die auf einem aus Plexiglas bestehenden Vorlaufkeil angeordnet sind. Der Keilwinkel des Vorlaufkeils ist entsprechend der gewünschten Ausbreitungsrichtung der Schallwelle im Werkstück gewählt.

Derartige Prüfköpfe werden z. B. für die Prüfung von Rohren auf Querfehler eingesetzt. Die Querfehlerprüfung von Rohren in der 12-Uhr-Lage gehört zur Standardtechnik und wird in der Regel mit zwei sich gegenüberstehenden Prüfköpfen realisiert, die in die Richtung des jeweils anderen Prüfkopfes schallen.

Das Prüfkopfpaar besteht entweder aus zwei Winkelprüfköpfen oder Normalprüfköpfen, die unter einem Winkel vorzugsweise über eine Wasserankopplung in das Rohr einschallen.

Zur vollständigen Prüfung der Rohroberfläche wird das Rohr beispielsweise schraubenlinienförmig unter der stationär in 12-Uhr-Position angeordneten Prüfeinheit hindurchgefahren oder das Rohr wird in Rotation versetzt und die Prüfeinheit verfährt linear über die Rohroberfläche.

Soll die Prüfleistung der Fehlerprüfung gesteigert werden, z. B. für eine schnelle 100%-Prüfung, müssen weitere Prüfkopfpaare installiert werden, die so anzuordnen sind, dass eine möglichst lückenlose Prüfung der Werkstückoberfläche erreicht wird.

Da die Anordnung weiterer Prüfkopfpaare in Verbindung mit einem möglichst platzsparenden Aufbau meist zu erhöhtem konstruktiven Aufwand führt, bieten sich hier als Alternative die aus der o. g. Gebrauchsmusterschrift bekannten Mehrfachschwingerlineale (MFS-Lineale) an.

Bei den MFS-Linealen handelt es sich um eine Anzahl von Ultraschallschwingern, die sehr eng benachbart linienförmig in einem Gehäuse angeordnet sind, wobei die Größe der Schwinger abhängig von der Prüfaufgabe ist.

Um die bei dieser Art der Prüfung unvermeidbar entstehenden Prüflücken zu schließen sind sogenannte getaktete Schwinger entwickelt worden (DE 19860127 C1).

Für die Querfehlerprüfung beträgt der Einschallwinkel max. 70° in der Regel aber 45°. Da MFS-Lineale üblicherweise als Normalprüfköpfe ausgeführt werden, muss das MFS-Lineal für die Winkeleinschallung in einem Winkel (Einfallwinkel) zur prüfenden Werkstückoberfläche angestellt werden. Dieser Winkel ist abhängig vom Medium mit seiner spezifischen Schallgeschwindigkeit und kann über das Brechungsgesetz berechnet werden.

Beispielsweise ist der Einfallwinkel beim Einsatz von Medien mit geringen Schallgeschwindigkeiten, wie z. B. Wasser, klein.

Mit Wasser gefüllte Kästen können problemlos für die Ultraschallprüfung mit MFS-Linealen eingesetzt werden, wenn sie unterhalb des Rohres (6-Uhr-Prüflage) angebracht werden.

Für eine Portallösung in 12-Uhr-Prüflage kommen Wasserkästen zum Ankoppeln wegen des hohen konstruktiven Aufwandes für die Abdichtung am zu prüfenden Rohr nicht in Frage.

Wegen der erforderlichen Abdichtung ist es zwar wesentlich einfacher, die Wasserkästen und die Prüfeinheit in 6-Uhr-Position anzuordnen, wenn das zu prüfende Rohr jedoch auf Rollgängen verfahrbar sein muss, ist dies konstruktionsbedingt im Regelfall nicht möglich.

Für diese Anwendungsfälle werden üblicherweise die bekannten Vorlaufkeile aus Vollkunststoff eingesetzt. Wegen der höheren Schallgeschwindigkeit von Kunststoffen gegenüber Wasser (ca. 50 - 100% höher) ist der Aufkeilungswinkel des Vorlaufkeils entsprechend größer. Neben einer größeren Bauhöhe, die fallweise konstruktive Probleme bereitet, bedingen größere Keilwinkel z. T. auch erheblich vergrößerte Schalllaufwege, die bei der bekannten höheren Dämpfung im Kunststoff gegenüber Wasser die Echohöhen des Schallsignals in einem erheblichen Maße reduzieren und damit eine sichere Signalerkennung erheblich erschweren oder sogar unmöglich machen.

Der Erfindung liegt daher die Aufgabe zugrunde, einen Ultraschallprüfkopf mit einem Vorlaufkeil und einem Mehrfachschwingerlineal zur zerstörungsfreien Prüfung auf Querfehler von metallischen Werkstücken, insbesondere von Rohren, anzugeben, mit dem auch in 12-Uhr-Position auf dem Werkstück eine Ultraschallprüfung einfach und zuverlässig durchgeführt und gleichzeitig eine geringe Bauhöhe des Prüfkopfes realisiert werden kann.

Erfindungsgemäß wird diese Aufgabe entsprechend den kennzeichnenden Merkmalen des Anspruches 1 gelöst. Vorteilhafte Weiterbildungen sind Gegenstand von Unteransprüchen. Nach der Lehre der Erfindung ist der Vorlaufkeil als ein mit Flüssigkeit gefüllter keilförmiger Hohlkörper ausgebildet, dessen Keilwinkel maximal 24° beträgt und der so auf dem Werkstück angeordnet ist, dass der Einschallwinkel maximal 70° in das Werkstück beträgt.

Vorteilhaft kommen als Flüssigkeiten Medien mit möglichst geringer Schallgeschwindigkeit und Dämpfung in Betracht, wie beispielsweise Wasser.

Der Vorteil der vorgeschlagenen Lösung liegt darin, mit dem erfindungsgemäßen Vorlaufkeil die günstigeren Schalleigenschaften von Flüssigkeiten, vornehmlich Schallgeschwindigkeit und Dämpfung, nutzen zu können, um eine einfache und sichere Prüfung auf Querfehler durchführen zu können.

Durch die Nutzung der vorteilhaften Eigenschaften von z. B. Wasser ist es außerdem möglich über einen nur kleinen Aufkeilungswinkel eine geringe Bauhöhe des Vorlaufkeils zu realisieren und gleichzeitig unter Vermeidung eines hohen konstruktiven Abdichtungsaufwandes das Werkstück in 12-Uhr-Lage prüfen zu können.

Dies wird an folgendem Beispiel deutlich:
- Schallgeschwindigkeit in Wasser bei 20°C: 1483 m/s
- Schallgeschwindigkeit in Kunststoff (z. B. Rexolite®): 2311 m/s

Während nach dem Brechungsgesetz bei einem Einschallwinkel von 45° der Keilwinkel des aus massivem Kunststoff bestehenden Vorlaufkeils 30,8° beträgt, errechnet sich für einen wassergefüllten Vorlaufkeil ein Keilwinkel von nur 18,8° und ermöglicht dadurch eine wesentlich geringere Bauhöhe des Prüfkopfs. Die sich für andere Einschallwinkel ergebenden Keilwinkel des Vorlaufkeils lassen sich über das Snellius'sche Brechungsgesetz berechnen unter Berücksichtigung der Schallgeschwindigkeit des jeweiligen Füllmediums des Vorlaufkeils.

Da der Vorlaufkeil unter Wasserankopplung direkt mit der Prüfstückoberfläche in Kontakt steht, besteht dieser vorteilhaft aus Kunststoff, wie z. B. aus Rexolite®. Das hat den Vorteil, dass ein "Einschleifen" des Vorlaufkeils auf der Werkstückoberfläche ermöglicht wird ohne die Werkstückoberfläche zu beschädigen.

Nach einer vorteilhaften Weiterbildung der Erfindung sind die inneren Flächen der Seitenplatten und der Deckenplatten des Vorlaufkeils mit einem schalldämpfenden Material ausgekleidet. Hierdurch werden vorteilhaft störende Ultraschallechos von den Seiten- und Deckenplatten verhindert. Es ist jedoch auch möglich, anstelle einer Auskleidung Platten aus entsprechendem Vollmaterial zu verwenden.

Weitere Merkmale, Vorteile und Einzelheiten der Erfindung ergeben sich aus der nachfolgenden Beschreibung.

Es zeigen:
- **Figur 1**: eine schematische Ansicht eines erfindungsgemäßen Ultraschallprüfkopfes mit einem mit Flüssigkeit gefüllten Hohlkörper als Vorlaufkeil,
- **Figur 2**: eine Schnittansicht des Vorlaufkeils in einer alternativen Ausgestaltung.

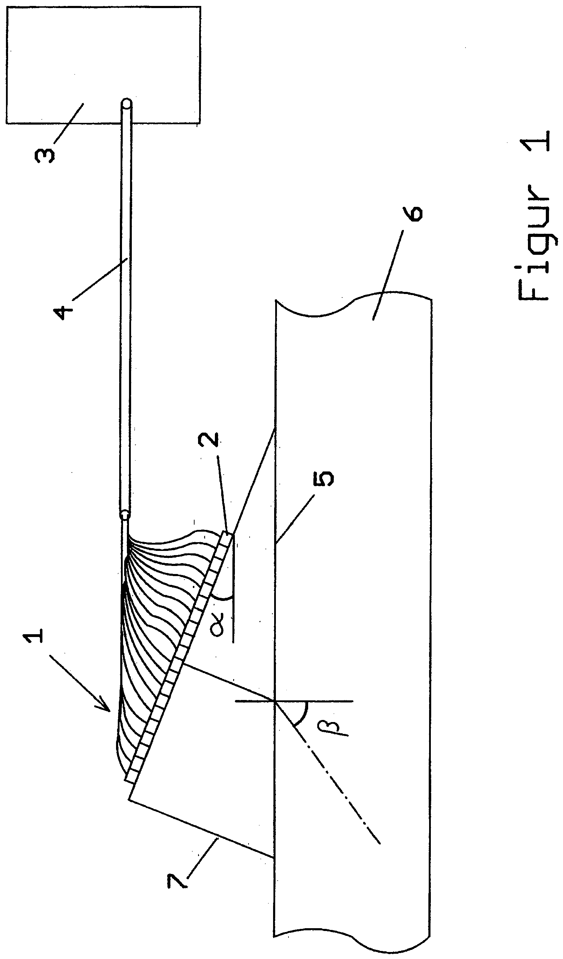

**Figur** 1 zeigt die schematische Ansicht eines erfindungsgemäßen Ultraschallprüfkopfes mit einem mit Flüssigkeit gefüllten Hohlkörper als Vorlaufkeil. Der Ultraschallprüfkopf 1 besteht im Wesentlichen aus einem Mehrfachschwingerlineal 2 und einem keilförmigen wassergefüllten Hohlkörper 7 als Vorlaufkeil. Das Mehrfachschwingerlineal 2 und der keilförmige Hohlkörper 7 sind mit einer Koppelmittelschicht aufeinander fixiert angeordnet. Die einzelnen Schwinger des Mehrfachschwingerlineals 2 sind über ein Kabel 4 mit einer Sonde-/Auswerteeinheit 3 verbunden. Über die Ankoppelfläche 5 des keilförmigen Hohlkörpers 7 wird unter Wasserbenetzung der Ultraschall in das Werkstück 6 eingekoppelt.

Bei dem dargestellten Ultraschallprüfkopf 1 handelt es sich um einen sogenannten 45°-Winkelprüfkopf, d. h. der Einschallwinkel β (Winkel zwischen der Senkrechten auf der Werkstückoberfläche und der Achse des Schallbündels) beträgt 45° **(****Figur 1****).**

Aufgrund der Befüllung des keilförmigen Hohlkörpers 7 mit Wasser beträgt der Keilwinkel α nur 18,8°. Der Ultraschallprüfkopf 1 kann dadurch in sehr geringer Bauhöhe gebaut werden und die konstruktive Auslegung für eine Prüfung in 12-Uhr-Position des Rohres wird wesentlich vereinfacht, da kein wegen der ansonsten notwendigen Abdichtung konstruktiv sehr aufwändiger Wasserkasten mehr für die Prüfung benötigt wird.

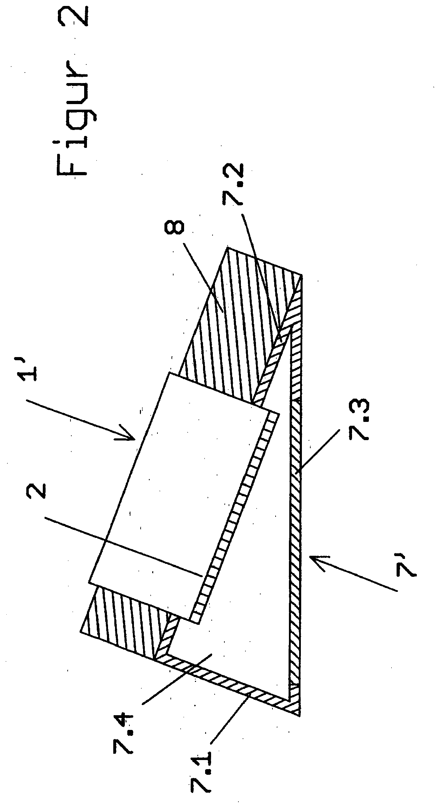

**Figur 2** zeigt in einer alternativen Ausgestaltung eine Schnittansicht des erfindungsgemäßen Ultraschallprüfkopfes 1' mit einem keilförmigen Hohlkörper 7' mit einem Mehrfachschwingerlineal 2, welches in direktem Kontakt steht zur Flüssigkeit im keilförmigen Hohlkörper 7'. Der Hohlkörper 7' besteht aus Deckenplatten 7.1 und 7.2, einer Grundplatte 7.3 sowie zwei Seitenplatten 7.4. Die einzelnen Platten 7.1, 7.2 und 7.4 bestehen erfindungsgemäß aus einem Kunststoff, der schalldämpfende Eigenschaften zur Unterdrückung störender Ultraschallechos aufweist. Als Material kommt hier z. B. Teflon® in Frage.

Die Grundplatte 7.3 besteht erfindungsgemäß aus einem gut den Schall leitenden Material mit geringer Dämpfung, wie z. B. Rexolite®. Alternativ können die Platten 7.1, 7.2, 7.4 z. B. auch aus Plexiglas bestehen, die mit entsprechenden den Schall dämpfenden Auskleidungen versehen sind.

In dem von den Platten eingeschlossenen Hohlraum ist ein hier nicht dargestelltes flüssiges Medium, z. B. Wasser zur Realisierung einer Wasservorlaufstrecke, eingefüllt. Es sind jedoch auch andere Flüssigkeiten anwendbar, die eine geringe Schallgeschwindigkeit und Dämpfung aufweisen.

Alternativ zur Anordnung in **Figur 1** ist in der Deckenplatte 7.2 eine Öffnung vorgesehen, in der der Ultraschallprüfkopf 1' mit geringem Spiel eingelassen ist und das Mehrfachschwingerlineal 2 mit dem Wasser direkt in Kontakt steht.

Zur Fixierung des Ultraschallprüfkopfes 1' in dieser Position ist dieser mit einem damit verbundenen Rahmen 8 versehen, der mit einer hier nicht dargestellten Dichtung versehen auf der Deckenplatte 7.2 aufliegt, damit fixiert ist und den durch das vorhandene Spiel entstehenden Spalt gegen ungewollten Wasseraustritt abdichtet.

Die für eine gute Einkopplung des Schalls in das Werkstück 6 **(****Figur 1****)** notwendige Wasserbenetzung kann z. B. dadurch erfolgen, dass ein stetiger Zulauf des keilförmigen Hohlkörpers 7' mit Wasser erfolgt, das anschließend über einen Überlauf der Ankoppelfläche 5 zugeführt wird.

### Bezugszeichenliste

| **Nr.** | **Bezeichnung** |
|---|---|
| 1, 1' | Ultraschallprüfkopf |
| 2 | Mehrfachschwingerlineal |
| 3 | Auswerteeinheit |
| 4 | Kabel |
| 5 | Ankoppelfläche |
| 6 | Werkstück |
| 7, 7' | keilförmiger Hohlkörper |
| 7.1, 7.2 | Deckenplatten |
| 7.3 | Grundplatte |
| 7.4 | Seitenplatte |
| 8 | Rahmen |

## Patentansprüche

1. Ultraschallprüfkopf (1,1') zur zerstörungsfreien Prüfung von metallischen Werkstücken, insbesondere von Rohren, auf Querfehler mit einem Vorlaufkeil und mit einer zeilenförmigen Anordnung von Schwingerelementen, wobei sich die Schwingerelemente zur Ankopplung an ein metallisches Werkstück (6) auf dem Vorlaufkeil befinden und wobei der Vorlaufkeil als ein mit Wasser gefüllter keilförmiger Hohlkörper (7, 7') ausgebildet ist, **dadurch gekennzeichnet,**
**dass** dessen Keilwinkel maximal 24° und dessen Einschallwinkel in dem metallischen Werkstück (6) maximal 70° beträgt, der keilförmige Hohlkörper (7, 7') aus Deckenplatten (7.1, 7.2), einer Grundplatte (7.3) und zwei Seitenplatten (7.4) besteht,
die Deckenplatten (7.1, 7.2) und die Seitenplatten (7.4) des keilförmigen Hohlkörpers (7, 7') aus einem schalldämpfenden Material und die mit dem Werkstück (6) in Kontakt stehende Grundplatte (7.3) aus einem gut schallleitenden Material bestehen.

2. Ultraschallprüfkopf (1,1') nach Anspruch 1, **dadurch gekennzeichnet,**
**dass** der Einschallwinkel maximal 50° beträgt.

3. Ultraschallprüfkopf (1,1') nach Anspruch 1, **dadurch gekennzeichnet,**
**dass** der Einschallwinkel 45° beträgt.

4. Ultraschallprüfkopf (1,1') nach einem der Ansprüche 1-3, **dadurch gekennzeichnet,**
**dass** der Hohlkörper (7, 7') aus Kunststoff besteht.

5. Ultraschallprüfkopf (1,1') nach Anspruch 1, **dadurch gekennzeichnet,**
**dass** die Deckenplatte (7.2) eine Öffnung zur Aufnahme des Ultraschallprüfkopfes (1) aufweist, welcher mit einem Rahmen (8) verbunden ist, der abdichtend auf der Deckenplatte (7.2) zur Auflage kommt und hiermit fixiert ist.

## Claims

1. An ultrasonic probe (1, 1')
for the non-destructive testing of metallic workpieces, in particular of tubes, for transverse flaws, with a wedge and with a arrangement in linear form of resonator elements, wherein the resonator elements are located on the wedge for coupling to a metallic workpicce, and wherein
the wedge is formed as a water-filled wedge-shaped hollow body (7, 7'),
**characterised in that**
the wedge angle thereof is at most 24° and the angle of incidence thereof in the metallic workpiece (6) is at most 70°,
the wedge-shaped hollow body (7, 7') consists of top plates (7.1, 7.2), a baseplate (7.3) and two side plates (7.4),
the top plates (7.1, 7.2) and the side plates (7.4) of the wedge-shaped hollow body (7, 7') consist of a sound-damping material and the baseplate (7.3) which is in contact with the workpiece (6) consists of a material which conducts sound well.

2. An ultrasonic probe (1, 1') according to Claim 1,
**characterised in that**
the angle of incidence is at most 50°.

3. An ultrasonic probe (1, 1') according to Claim 1,
**characterised in that**
the angle of incidence is 45°.

4. An ultrasonic probe (1, 1') according to one of Claims 1 - 3,
**characterised in that**
the hollow body (7, 7') consists of plastics material.

5. An ultrasonic probe (1, 1') according to Claim 1,
**characterised in that**
the top plate (7.2) has an opening for receiving the ultrasonic probe (1), which is connected to a frame (8) which comes to lie in sealing manner against the top plate (7.2) and is fixed therewith.

## Revendications

1. Tête de contrôle à ultrasons (1, 1') pour le contrôle sans destruction de pièces métalliques, en particulier de tubes, pour détecter des défauts transversaux avec un coin d'avancée et avec un agencement en lignes d'éléments oscillants, dans laquelle les éléments oscillants se trouvent sur le coin d'avancée pour le couplage à une pièce métallique (6), dans laquelle
le coin d'avancée est formé comme un corps creux (7, 7') en forme de coin rempli d'eau,
**caractérisé en ce que**
son angle d'attaque est au maximum de 24° et son angle d'irradiation dans la pièce métallique (6) est au maximum de 70°,
le corps creux en forme de coin (7, 7') est constitué de plaques de recouvrement (7.1, 7.2), d'une plaque de base (7.3) et de deux plaques latérales (7.4),
les plaques de recouvrement (7.1, 7.2) et les plaques latérales (7.4) du corps creux en forme de coin (7, 7') sont constituées d'un matériau isolant acoustique et la plaque de base (7.3) en contact avec la pièce (6) est constituée d'un matériau bon conducteur du son.

2. Tête de contrôle à ultrasons (1, 1') selon la revendication 1,
**caractérisé en ce que**
l'angle d'irradiation est au maximum de 50°.

3. Tête de contrôle à ultrasons (1, 1') selon la revendication 1,
**caractérisé en ce que**
l'angle d'irradiation est au maximum de 45°.

4. Tête de contrôle à ultrasons (1, 1') selon l'une des revendications 1 à 3,
**caractérisée en ce que**
le corps creux (7, 7') est constitué de matière plastique.

5. Tête de contrôle à ultrasons (1, 1') selon la revendication 1,
**caractérisée en ce que**
la plaque de recouvrement (7.2) présente une ouverture pour la réception de la tête de contrôle à ultrasons (1), qui est reliée à un cadre (8) qui vient reposer de façon étanche sur la plaque de recouvrement (7.2) et est ainsi fixé.
